# EUROPEAN PATENT SPECIFICATION

(11) **EP 3 746 360 B1**
(45) Date of publication and mention of the grant of the patent: **13.11.2024**
(21) Application number: 19748026.2
(22) Date of filing: 31.01.2019
(51) Int. Cl.: B63H 9/06, B63H 9/061, B63H 9/10

(54) **A SAIL**
SEGEL
VOILE

(30) Priority: 02.02.2018 NZ 18739652
(43) Date of publication of application: 09.12.2020
(73) Proprietor: Fraser, Mark, Hamilton Brisbane, QLD 4007 (AU)
(72) Inventor: Fraser, Mark, Hamilton Brisbane, QLD 4007 (AU)
(74) Representative: Algemeen Octrooi- en Merkenbureau B.V.
(86) International application number: PCT/IB2019/050765
(87) International publication number: WO 2019/150289

(56) References cited:
- EP-A2- 0 096 554
- WO-A1-2014/053029
- WO-A1-2016/076727
- FR-A1- 3 029 888
- GB-A- 454 556
- GB-A- 506 136
- JP-A- S57 158 192
- KR-A- 20140 109 054
- US-A- 4 388 888
- US-A1- 2017 369 139

## Description

The present invention relates to a sail. More particularly but not exclusively it relates to a nestable wing sail that can change its surface area by partial extension and retraction in a fore aft direction

### BACKGROUND

Yachts may be desired to be sailed in a variety of wind conditions. A yacht is preferably able to be optimised for different conditions, in particular the sail area may need to be adjusted. Sails are generally of two basic constructions soft, fabric-shaped sails that are shell like, and wing sails which form a 3D cross section wing shape. Typically, a mainsail is reefed to decrease its sail area. A reef reduces the area of a sail, usually by folding or furling one edge of the sail in on itself. This may be achieved by retracting the mainsail downwards towards the boom, or forward towards the mast. Where the main sail is a wing sail, which is a solid sail that is not able to be reefed, it may be difficult to decrease the area of the sail. One way of achieving a different sail area is by changing the wing sail for a wing sail of a different area, this requires stepping and un-stepping wing sails.

French patent publication FR-A1-3029888 discloses a sail incorporating the features of the preamble of claim 1.

It is an object of the present invention to provide a nestable wing sail that overcomes or at least partially ameliorates some of the abovementioned disadvantages or which at least provides the public with a useful choice.

### STATEMENTS OF INVENTION

The present invention relates to a wing sail for a yacht according to claim 1.

In a further embodiment, the primary section comprises a cavity defined by the sides, that can receive the movable section.

In a further embodiment, the primary section and movable section comprise sail area that make up the sail area of the wing sail.

In a further embodiment, the sail comprises at least two sail sections, a primary section forming an aerofoil wing shape having a cavity intermediate port and starboard face sides which converge to form at the primary section a leech, and at least one movable section moveable between a first condition where the movable section is enveloped or partially enveloped in the cavity or otherwise stored at the leech, and a second condition where at least a portion of the movable section extends from the leech out of the cavity intermediate the primary section leech, where in the second condition the movable section adds to the sail area of the sail.

In one embodiment, the sides comprise aerofoil surfaces.

In one embodiment, the movable section is nested or partially nested within the primary section.

The below embodiments may relate to any of the above statements of invention.

In one embodiment, in the first condition the movable section is fully nested within the primary section so that the leech of the primary section forms the leech of the sail.

In one embodiment, in the second condition the aft edge of the movable section forms at least part of the leech of the sail.

In one embodiment, the movable section translates with respect to the primary section to move between the first and second condition.

In one embodiment, the movable section rotates with respect to the primary section to move between the first and second condition.

In one embodiment, the movable section rotates rotate about a pivot point near the head of the sail.

In one embodiment, the movable section rotate about a pivot point near the foot of the sail.

In one embodiment, the primary section comprises flexible regions at its leech that is configured to flex to allow the movable section to pass intermediate the sides of the primary section through the primary section leech.

In one embodiment, the movable section is a soft sail.

In one embodiment, the movable section is an aerofoil wing sail.

In one embodiment, the aft edges of a sail section form a leech when not spread laterally apart by an adjacent sail section.

In one embodiment, the aft edges of a sail section overlap with the adjacent section to form a join comprising a substantially continuous surface between the sections adjacent each other when spread apart by the adjacent sail section.

In one embodiment, the joins bridge adjacent sections so as to form a substantially continuous surface between adjacent sail sections.

In one embodiment, the sail comprises two or more movable sections.

In one embodiment, the sail comprises the movable section and a second movable section.

In one embodiment, the second movable section nests within the movable section, in a similar configuration to how the movable section nests within the primary section.

In one embodiment, at least a portion of the movable section leech is configured to allow at least a portion of the second movable section to pass therethrough.

In one embodiment, each sail section has a sail area greater than the sail section aft of it.

In one embodiment, the sail comprises a mechanism to actuate the movable sections between their first and second conditions.

In one embodiment, the wing sail has an adjustable effective sail area by extending or retracting a nested wing sail section through the leech of a primary wing sail section.

In one embodiment, the nested wing sail section nests within a cavity of the primary wing sail section.

In one embodiment, the area towards and along the leech of the primary wing sail section is flexible to allow the nested wing sail to pass therethrough.

In one embodiment, there are multiple nested wing sail sections within the primary wing sail section configured to extend the effective sail area of the sail.

In one embodiment, the primary wing sail section is attached to a yacht.

In one embodiment, the primary wing sail section comprises a mast.

In a further embodiment, a yacht comprises the sail described above.

In one embodiment, the yacht comprises mechanisms to actuate the moving of the one or more movable sections.

In one embodiment, the yacht extends its effect sail area by moving a moveable section at least partially out of the primary section.

Other embodiments may become apparent from the following description which is given by way of example only and with reference to the accompanying drawings.

As used herein the term "and/or" means "and" or "or", or both.

As used herein "(s)" following a noun means the plural and/or singular forms of the noun.

The term "comprising" as used in this specification means "consisting at least in part of". When interpreting statements in this specification which include that term, the features, prefaced by that term in each statement, all need to be present but other features can also be present. Related terms such as "comprise" and "comprised" are to be interpreted in the same manner.

### FIGURE DESCRIPTIONS

The invention will now be described by way of example only and with reference to the drawings in which:
Figure 1: shows a side schematic view of a nestable wing sail in an extended condition.
Figure 2A: shows a side schematic view of a nestable wing sail in a retracted condition.
Figure 2B: shows a top schematic view of Figure 2A.
Figure 3A: shows a top schematic view of a wing sail in a retracted condition.
Figure 3B: shows a top schematic view of a wing sail in an extended condition.
Figure 4A: shows a rear perspective view of a wing sail in a retracted condition.
Figure 4B: shows a rear perspective view of a wing sail in an extended condition.
Figure 5: shows a rear view of a wing sail in an extended position.
Figure 6: shows a top schematic view of a wing sail in the extended condition, whereby the moveable section can pivot.
Figure 7A: shows a top schematic view of a wing sail with the moveable section fully retracted within the primary section.
Figure 7B: shows a top schematic view of a wing sail with the moveable section partially extending out of the fore section.
Figure 7C: shows a top schematic view of a wing sail with the moveable section fully extending from the fore section.
Figure 8A: shows a side schematic view of an alternative wing sail, where the moveable section translates from the fore section.
Figure 9A: shows Figure 8A extended.
Figure 9B: shows a top schematic view of a wing sail of Figure 9A.
Figure 10A shows a side schematic view of an alternative embodiment of a nestable wing sail with a furling moveable section.
Figure 10B: shows a top schematic view of Figure 10A.
Figure 10C: shows an extended condition of Figure 10A.
Figure 10D: shows a top schematic view of Figure 10C.
Figure 11A: shows a side schematic view of a nestable wing sail with two moveable sections.
Figure 11B: shows a top schematic view of Figure 11A.
Figure 12A: shows a side schematic view of a nestable wing sail of an alternative embodiment where the moveable section is actuated out via a sail boom.
Figure 12B: shows an extended view of figure 12A
Figure 13A: shows a side schematic view of a nestable wing sail of an alternative embodiment where the moveable section slides down and aft to its extended condition.
Figure 13B: shows an extended view of figure 13A.
Figure 14A: shows a side schematic view of a nestable wing sail of an alternative embodiment where the sail has a gap intermediate the moveable section and the primary section.
Figure 14B: shows a top schematic view of 14A.
Figure 14C-E: shows a top schematic view of the sail of Figure 14A, showing the moveable section retracting into the primary section.

### DETAILED DESCRIPTION

With reference to the above drawings, in which similar features are generally indicated by similar numerals, a sail according to a first aspect of the invention is generally indicated by the numeral 10.

In one embodiment now described, there is provided a nestable wing sail 10 configured to be used on a yacht 2. The yacht having a hull 3, and the wing sail optionally attached to the hull via a mast 4. Alternatively, the mast may be integral with the wing sail. The wing sail is preferably of an aerofoil shape, and is formed from skins that create the sides of the wing sail, and the surfaces to be the effective sail area.

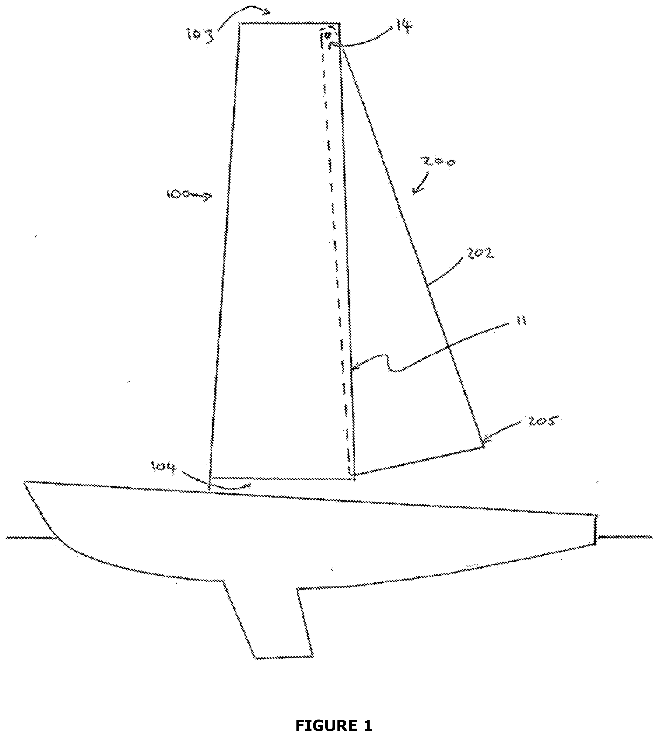

The sail 10 comprises a primary, or forward section, from which two or more moveable sections are able nest within. The primary section comprises a cavity 109, for the moveable sections to nest. The moveable sections are able to extend out from the cavity 109, and aft through the leech 102. There may be multiple moveable sections able to nest within the primary section. Moveable sections may be described as first, second and third moveable sections and so forth. The primary section 100 (as shown in Figure 1) houses the moveable sections.

Moving of the moveable sections aft from the primary section allows the sail 10 to increase its effective sail area. To reduce the sail area, the moveable sections are retracted back into their adjacent and forward sections, from their extended position.

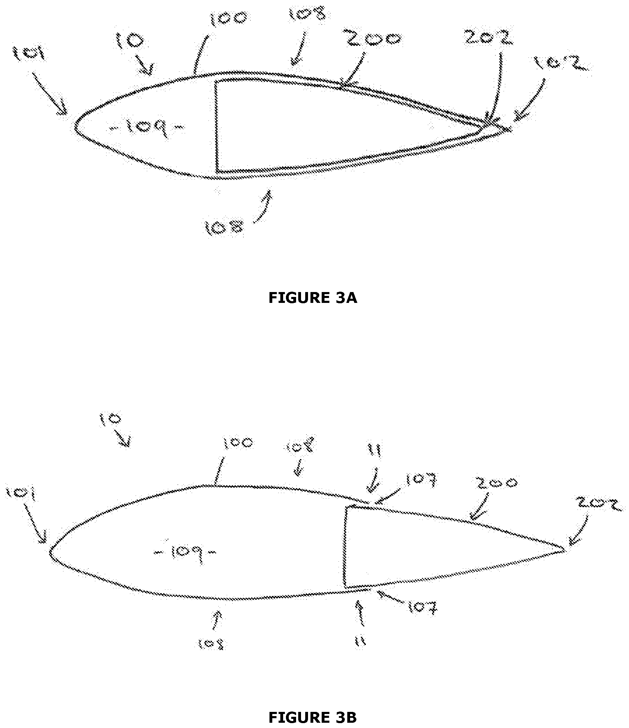

Figure 3B shows a primary section 100 having a first moveable section 200 extending from the primary section 100 leech 102. The leech 102 is formed from each aft edge 107 of each side 108 of the primary section 100 (as shown in Figure 3A-B).

In the embodiment shown in Figure 1A, the first moveable section 200 extends out from the leech 102 about a pivot point 14 located near the head 103 of the primary section 100. As the first moveable section 200 extends aft from the primary section 100, the primary section aft edges 107 becomes a cover or join 11 intermediate the primary section 100 and the first moveable section 200. The leech 202 of the first moveable section 200, then becomes the leech of the sail 10.

Figure 1B shows the first moveable section 200 nested within the primary section 100. The leech 102 of the primary section 100 is the leech of the sail 10.

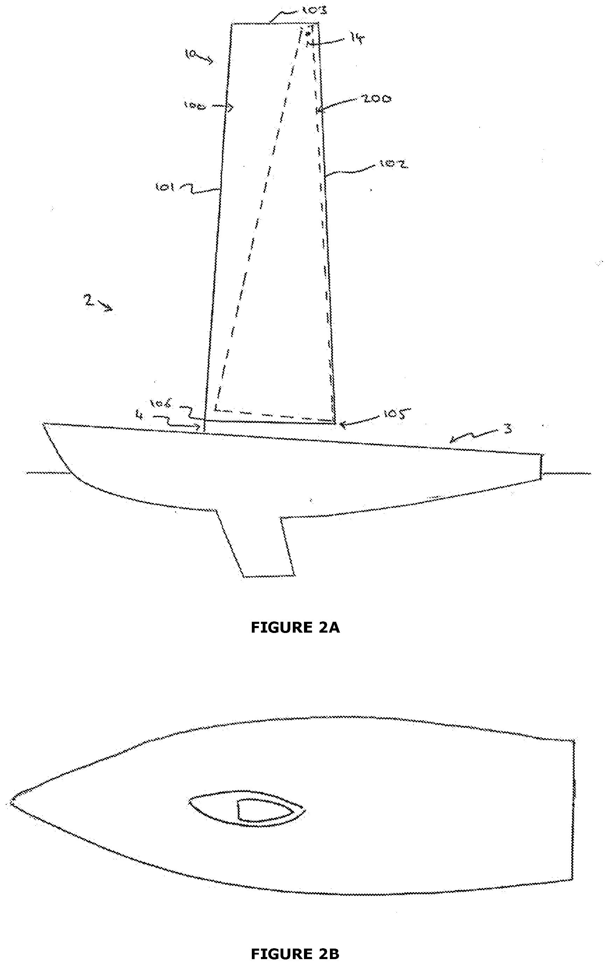

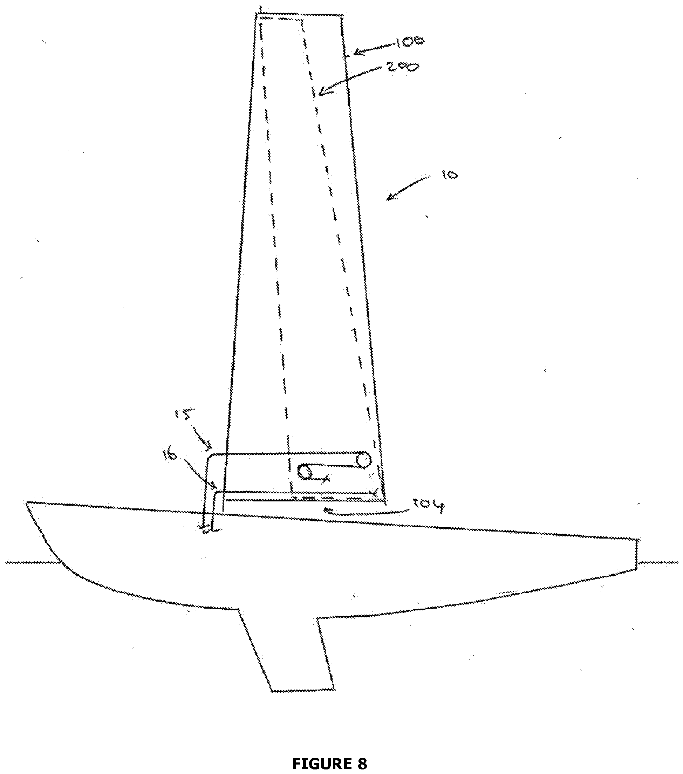

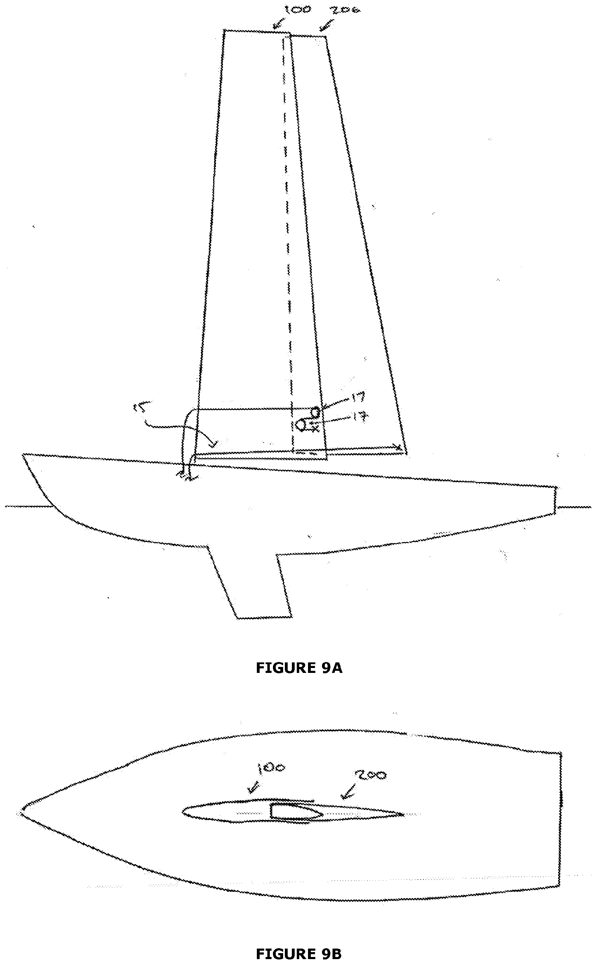

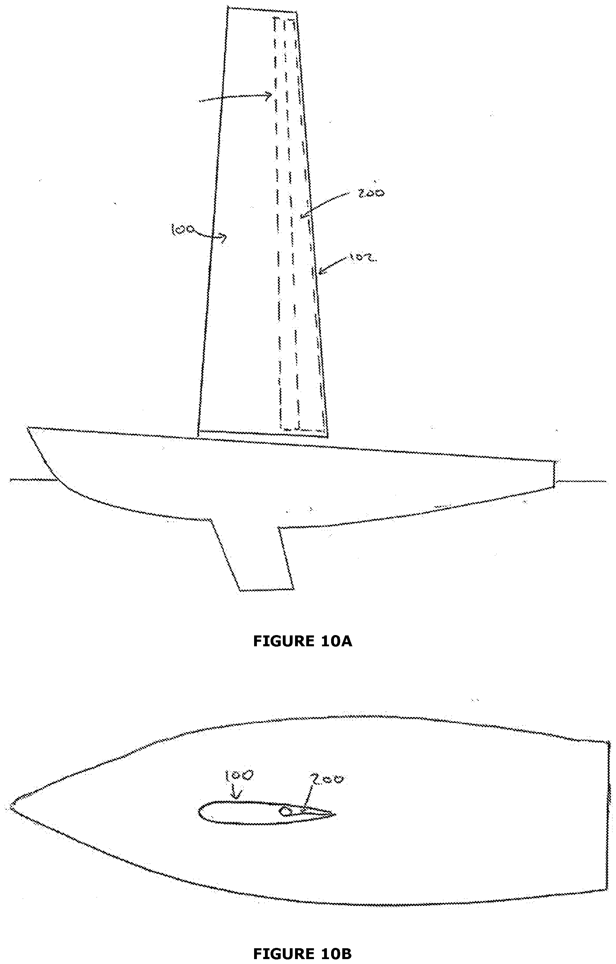

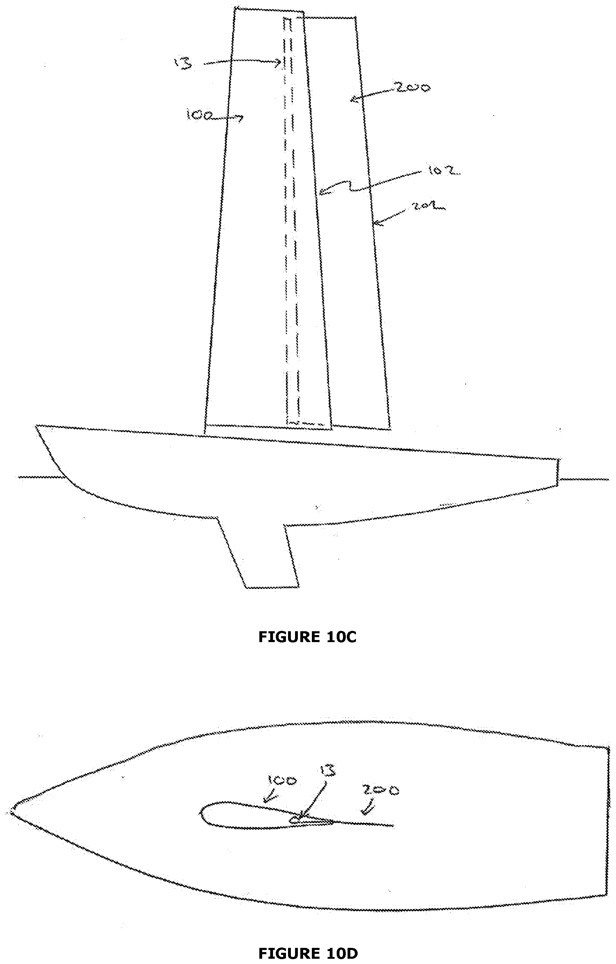

The embodiments shown in Figures 1 & 2 are just one embodiment of an extendable nested wing sail. The embodiment shown in Figures 1 & 2 shows a rotating moveable section 200. Other embodiments may be used and fall within the scope of invention, such as embodiments shown in Figures 8 & 9 where a translating moveable section 200 is used. In further embodiments, such as in Figures 10, an unfurling moveable section 200 is utilised to extend the surface area of a wing sail. This will be described in further detail later.

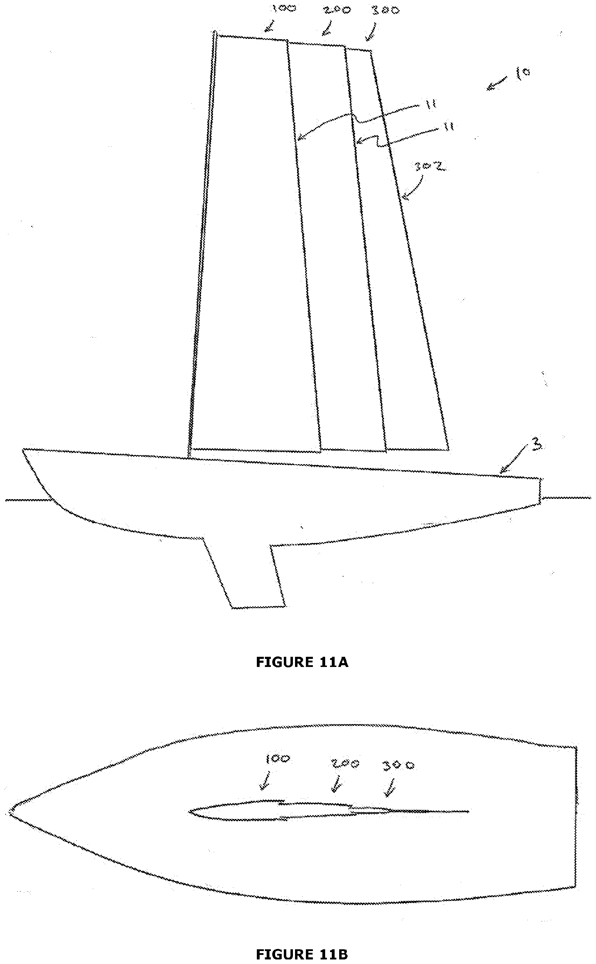

There may be multiple extending sections that can be nested within the primary section 100. Figures 11A & 11B show a sail with two moveable sections 200 and 300. Again, these moveable sections 200, 300 may translate from the primary section 100, or they may rotate about a pivot point from their adjacent forward section, or both may rotate about the primary section (not shown), or they may utilise a combination or translation and rotation.

Figures 3A & 3B show details of a simplified cross section of the embodiment of Figures 1 & 2. It can be seen that the aft edges 107 of the leech 102 of the primary section 100 are able to open up to allow the first moveable section 200 to pass therethrough.

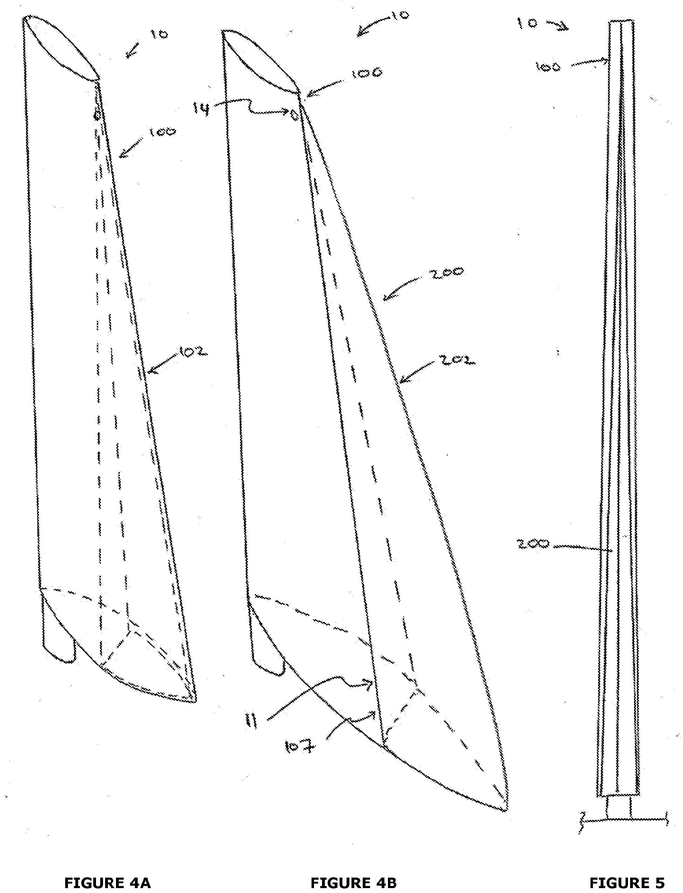

Figures 4A, 4B & 5 show a perspective view of the embodiment of Figure 1, and show that the trailing edges 107 or leech 102 of the primary section 100 open up and allow the moveable section 200 to pass through.

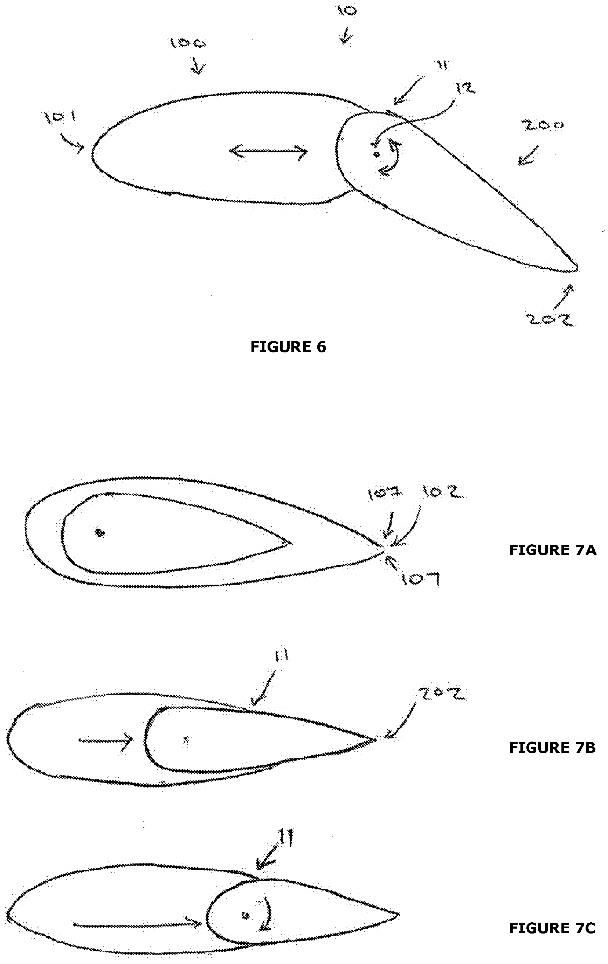

Figure 6 shows an embodiment where the first moveable section or any of the trailing sections are able to trim or rotate with respect to the primary section, and/or their adjacent sections. This allows the wing sail 10 to be better configured for the wind / sailing conditions.

Figures 7A-C show a sail 10 that has a nested section that is able to be partially extended out from the primary section 100. This allows a graduation of configurations between a fully retracted and a fully extended condition of the sail 10. This partial extension can be used in any of the embodiments as described herein.

Figures 7 A-C also show the moveable section 200 being able to pivot about a point 12 to trim the sail. There may be multiple moveable sections that are able to trim. This trimming configuration may be used in any of the embodiments as described herein.

Figures 8 & 9 show the retracted and extended configurations of a translating moveable section 200. Figures 8 & 9 show a translating nested section 200 that translates from the trailing edge or leech 102 of the primary section 100. An extension mechanism 15 and a retraction mechanism 16 is used to extend and retract the one or moveable sections.

In the most basic form the extension mechanism 15 is a rope or other flexible member, such as wire, in combination with one or more pulleys 17 that allows pulling of a rope at one end to extend the first moveable section 200 from the primary section 100. As shown in Figure 8, a retraction mechanism 16 is a rope attached to the foot 104 of the moveable section 200, so the moveable section 200 is able to be pulled towards the bow of the boat, to nest inside the primary section 100.

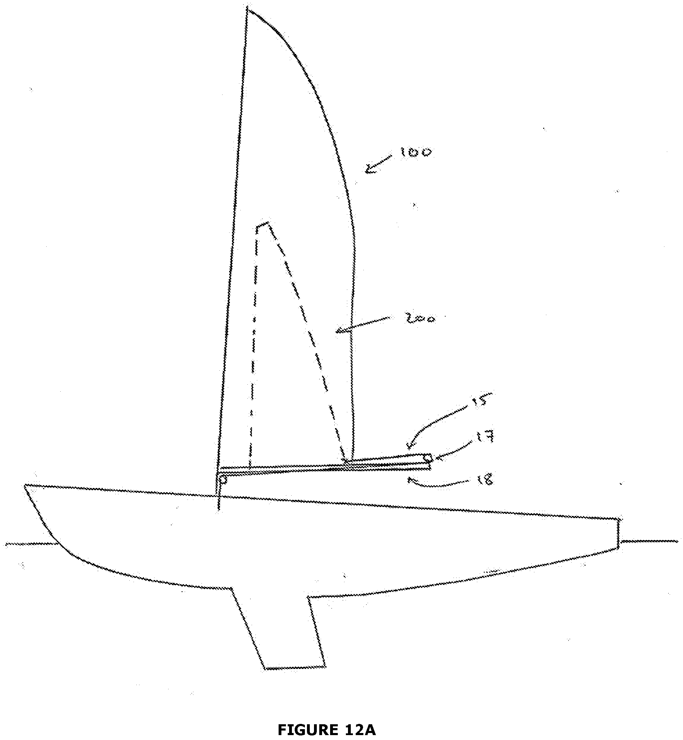

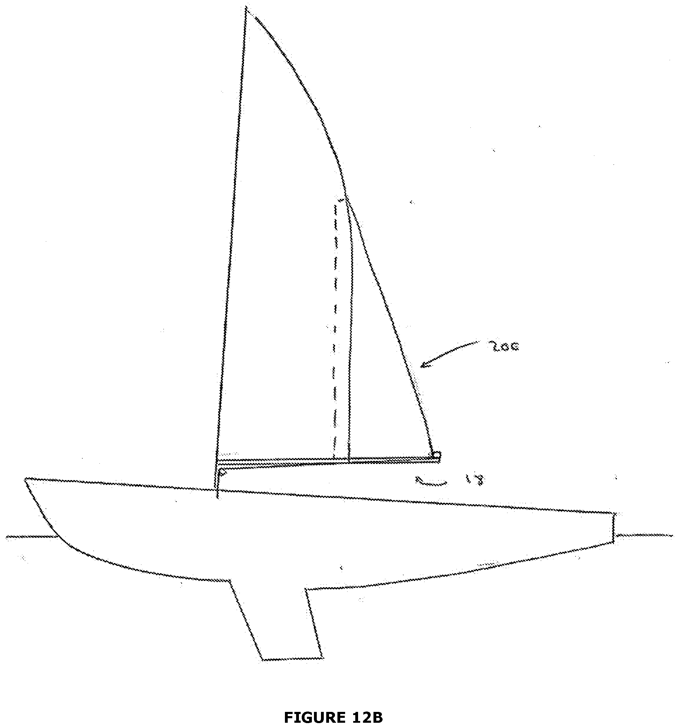

There may be numerous extension and retraction mechanisms configured and designed to allow optimum or desired extension and retraction of the nested sections. An alternative rope and pulley system is shown in Figure 12A-B, where a boom 18 is utilised to locate a pulley 17 at its distal end. This allows a rope to pull out a moveable section towards the distal end of the boom 18.

There are many other extension and retraction mechanisms that could be utilised with the present invention. Some examples are linear actuators which are, for example, hydraulic or electric powered.

Figures 10A-D show a further embodiment of the invention, wherein the nested section 200 is a single "soft" or "2D" sail. The soft moveable section 200 is configured to be unfurled about a roller 13 to extend it outwards from the leech 102. This is a more simplified design, wherein the leech 102 does not need to extend laterally as much to allow the soft moveable section 200 to pass therethrough, compared to a wing moveable section.

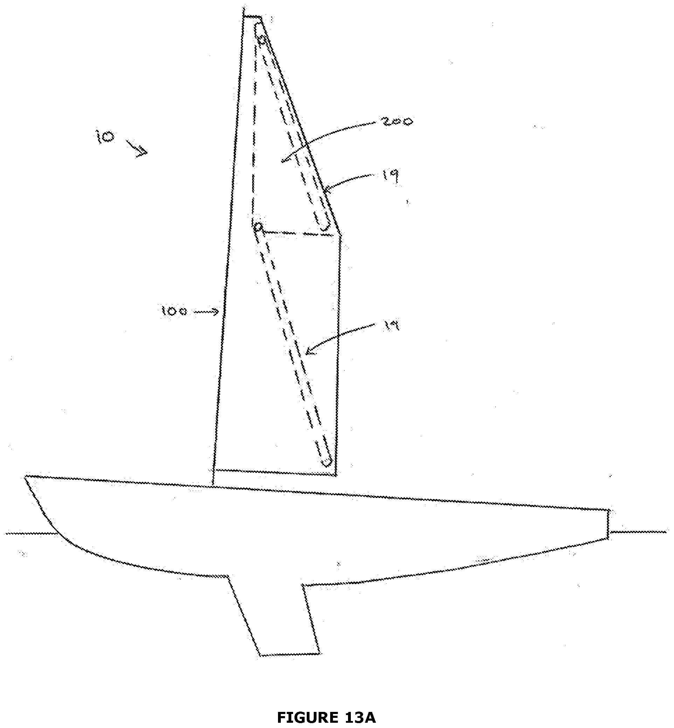

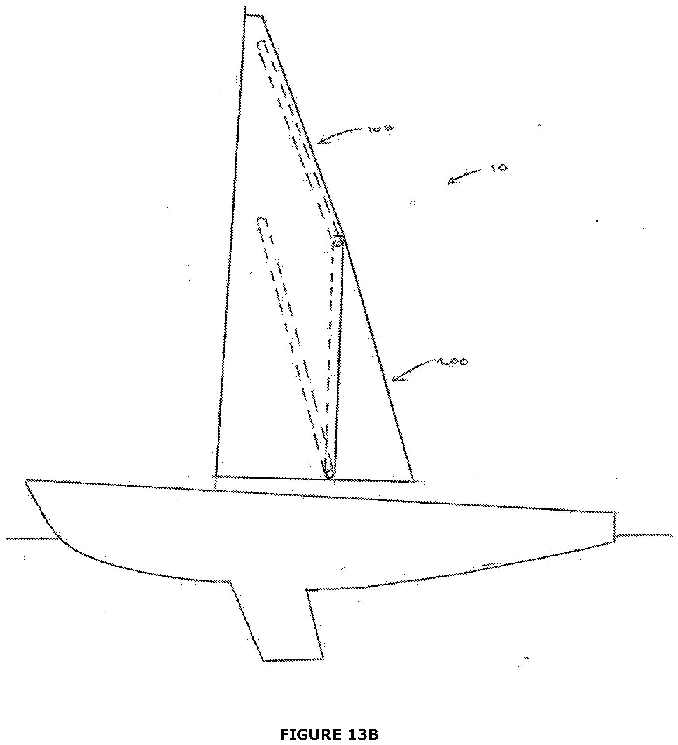

Figures 13A-B show a further embodiment, where the moveable section 200 is configured to slide/translate downwards towards its extended condition as shown in Figure 13B. The moveable section 200 is configured to slide along tracks 19 (not all shown) to move between a retracted and extended condition. This embodiment allows the movable section 200 to be gravity assisted towards its extended condition. A simply halyard system attached to the moveable section 200 may be used to retract the moveable section 200 back into the primary section 100. This is just one embodiment of a tracked system, there may be many different configurations and track patterns appropriate for different sail types, and designs. For example, less steep tracks, tracks that utilise hydraulics to move the moveable sections 200 etc.

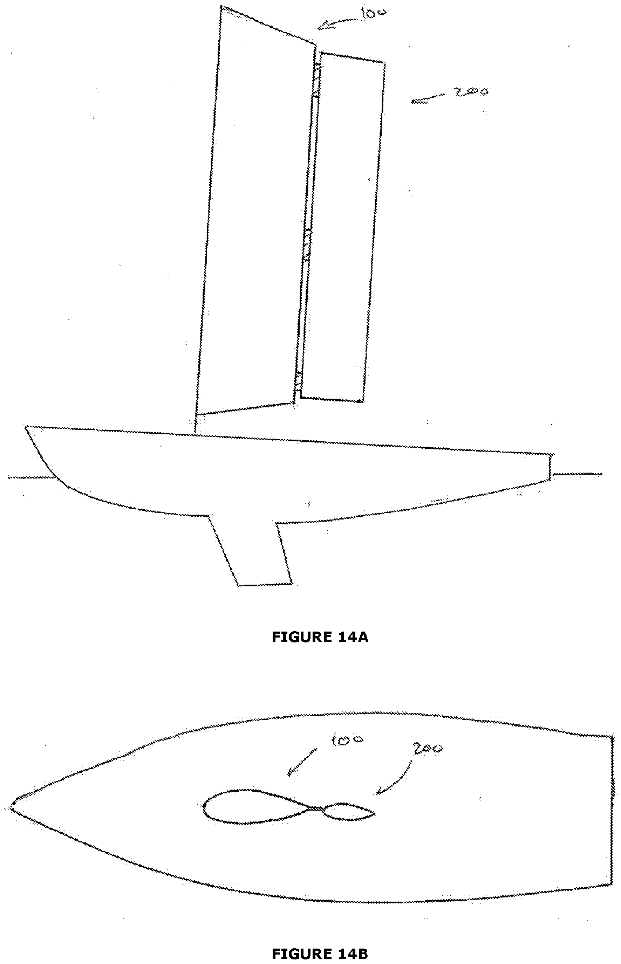

Figures 14A-E show a further embodiment of the present invention where the aerofoil shape of the moveable section 200 fully extends out of the aerofoil shape of the primary section 100. This configuration allows air flow intermediate the leech 102 and the luff 201 of the moveable section 201. This configuration of a gap seen, often seen intermediate a trim tab and main section is known in existing wing sails. However, this trim tab has not previously been able to be retracted into a forward sail section, or been able have its effective sail area removed from the overall effective sail area.

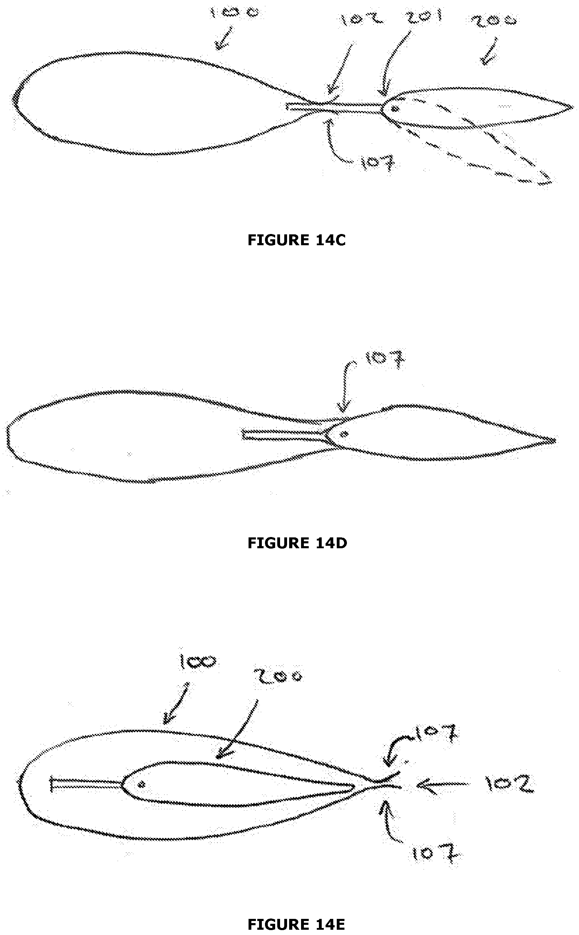

The moveable section 200 seen in Figure 14 may be able to pivoted about an axis so as to allow differing wing shapes.

The leech 102 may be configured to allow easy entry of the movable section 200 back in to the primary section 100. Figure 14 C shows the upturned edges of the leech 102 that allow the movable section 200 to start entering into the leech 102. This is required, as in other embodiments where the movable section stays keeps the leech 102 open, in the figure 14 embodiment the leech 102 is allowed to close back in on itself. And thus, a configurations such as a upturn at each leech edge is utilised to allow the movable section 200 to start entering into the leech 102

The leech opening, for all embodiments, it may be of a variety of configurations. In one embodiment, the wing sections may have flexible ribs on each side that are configured to flex outwards so that the aft edge of the wing section, at the leech edge 102, able to laterally open up to allow movable sections 200 to enter and exit. Flexible ribs (or battens) are well-known in the sailing industry.

The leech 102 of a section that is able to laterally open up has aft edges 107 as shown in figure 3B.

In some embodiments the aft edges 107 are substantially stiff so that they are able to be actuated laterally outwards (independent of the respective moveable section) to allow a movable section to pass therethrough. This is an alternative to the movable section itself opening up the aft edges 107/leech 102 as it passes through. However, in most embodiments, the aft edges that form the leech of a respective section are substantially resilient and flexible so that they follow the outer surface of the respective movable section.

Preferably the aft edges 107 are able to form a join 11 as described previously. This join may include or have an integral flexible member that is compliant with the angles between two adjacent sections. The join ideally creates a smooth transition between the sail sections.

The aft edges 107 may in some embodiments be biased open (i.e. laterally spread apart), with actuation to close the aft edges 107 to form a leech 102, in behind the moveable section once it is fully nested within the section that houses it. However, more likely, is that the aft edges 107 are biased closed, and forced to be spread laterally apart by moveable section passing through.

Where the leech 102 and aft edges 107 and other features of the primary section are described, it is incorporated in the present invention that the moveable sections that have further nested moveable sections within them, may include the same designs, features and configurations of the primary section.

Where in the foregoing description reference has been made to elements or integers having known equivalents, then such equivalents are included as if they were individually set forth.

## Claims

1. A wing sail (10) for a yacht (2), the wing sail (10) comprising at least two sail sections,
a. a primary section (100) attached, integral with, or comprising a mast (4), and comprising two skins forming at least part of an aerofoil surface, the primary section (100) further comprising a leech (102) at aft edges (107) of and where the two skins converge, and
b. a movable section (200) configured to move between a first condition where the movable section (200) is nested or partially nested within or at the leech (102) of the primary section (100), and a second condition where the movable section (200) extends at least in part from at least part of the leech (102) from intermediate the two skins, **characterized in that**
c. the sail comprises a second movable section (300), wherein the second movable section (300) nests within the movable section (200) in a similar configuration to how the movable section (200) nests within the primary section (100).

2. A sail (10) as claimed in claim 1, wherein the primary section (100) comprises a cavity (109) between the two skins, that can receive the movable section (200).

3. A sail (10) as claimed in claim 1 or 2, wherein the primary section (100) and the movable section (200) comprise sail area that make up the sail area of the wing sail.

4. A sail (10) as claimed in any one of the preceding claims, wherein in the first condition the movable section (200) is fully nested within the primary section (100) so that the leech (102) of the primary section forms the leech of the sail (10).

5. A sail (10) as claimed in any one of the preceding claims, wherein in the second condition the aft edge of the movable section (200) forms at least part of the leech of the sail.

6. A sail (10) as claimed in any one of the preceding claims, wherein the movable section (200) translates with respect to the primary section (100) to move between the first and second condition.

7. A sail (10) as claimed in any one of the preceding claims, wherein the movable section (200) rotates with respect to the primary section (100) to move between the first and second condition.

8. A sail (10) as claimed in any one of the preceding claims, wherein the primary section (100) comprises flexible regions at its leech (102) that are configured to flex to allow the movable section (200) to pass intermediate the sides of the primary section (100) through the primary section leech (102).

9. A sail (10) as claimed in any one of the preceding claims, wherein the aft edges of a sail section form a leech when not spread laterally apart by an adjacent sail section.

10. A sail (10) as claimed in claim 9, wherein the aft edges of the primary section (100) overlap with the adjacent section to form a join comprising a substantially continuous surface between the sections adjacent each other when spread apart by the adjacent sail section.

11. A yacht (2) comprising a wing sail (10) as claimed in any one of the preceding claims.

## Patentansprüche

1. Flügelsegel (10) für eine Yacht (2), wobei das Flügelsegel (10) mindestens zwei Segelabschnitte umfasst,
a. einen primären Abschnitt (100), an einem Mast (4) befestigt, integral mit diesem oder einen solchen umfassend und zwei Häute umfassend, die zumindest ein Teil einer aerodynamischen Profiloberfläche sind, wobei der primäre Abschnitt (100) außerdem ein Liek (102) an den Achterkanten (107) davon, dort, wo die beiden Häute zusammenlaufen, aufweist, und
b. einen beweglichen Abschnitt (200), der dazu ausgelegt ist, sich zwischen einem ersten Zustand, bei dem der bewegliche Abschnitt (200) innerhalb oder am Liek (102) des primären Abschnitts (100) verschachtelt oder teilweise verschachtelt ist, und einem zweiten Zustand, bei dem sich der bewegliche Abschnitt (200) zumindest teilweise von zumindest einem Teil des Lieks (102) aus dem Zwischenraum der zwei Häute erstreckt, zu bewegen, **dadurch gekennzeichnet, dass**
c. das Segel einen zweiten beweglichen Abschnitt (300) umfasst, wobei der zweite bewegliche Abschnitt (300) innerhalb des beweglichen Abschnitts (200) in ähnlicher Auslegung verschachtelt ist, wie der bewegliche Abschnitt (200) innerhalb des primären Abschnitts (100) verschachtelt ist.

2. Segel (10) nach Anspruch 1, wobei der primäre Abschnitt (100) einen Hohlraum (109) zwischen den beiden Häuten aufweist, der den beweglichen Abschnitt (200) aufnehmen kann.

3. Segel (10) nach Anspruch 1 oder 2, wobei der primäre Abschnitt (100) und der bewegliche Abschnitt (200) Segelfläche umfassen, die die Segelfläche des Flügelsegels ausmacht.

4. Segel (10) nach einem der vorhergehenden Ansprüche, wobei im ersten Zustand der bewegliche Abschnitt (200) vollständig innerhalb des primären Abschnitts (100) verschachtelt ist, sodass das Liek (102) des primären Abschnitts das Liek des Segels (10) bildet.

5. Segel (10) nach einem der vorhergehenden Ansprüche, wobei im zweiten Zustand die Achterkante des beweglichen Abschnitts (200) zumindest einen Teil des Lieks des Segels bildet.

6. Segel (10) nach einem der vorhergehenden Ansprüche, wobei der bewegliche Abschnitt (200) in Bezug auf den primären Abschnitt (100) verschoben wird, um sich zwischen dem ersten und zweiten Zustand zu bewegen.

7. Segel (10) nach einem der vorhergehenden Ansprüche, wobei sich der bewegliche Abschnitt (200) in Bezug auf den primären Abschnitt (100) dreht, um sich zwischen dem ersten und zweiten Zustand zu bewegen.

8. Segel (10) nach einem der vorhergehenden Ansprüche, wobei der primäre Abschnitt (100) an seinem Liek (102) flexible Bereiche aufweist, die dazu ausgelegt sind, sich zu verbiegen, um dem beweglichen Abschnitt (200) zu ermöglichen, zwischen den Seiten des primären Abschnitts (100) durch das Liek des primären Abschnitts (102) zu laufen.

9. Segel (10) nach einem der vorhergehenden Ansprüche, wobei die Achterkanten eines Segelabschnitts ein Liek bilden, wenn sie nicht durch einen angrenzenden Segelabschnitt lateral auseinander gespreizt werden.

10. Segel (10) nach Anspruch 9, wobei die Achterkanten des primären Abschnitts (100) den angrenzenden Abschnitt überlappen, um eine Verbindung zu bilden, die eine im Wesentlichen durchgehende Fläche zwischen den aneinander angrenzenden Abschnitten umfasst, wenn sie durch den angrenzenden Segelabschnitt auseinander gespreizt werden.

11. Yacht (2) mit einem Flügelsegel (10) nach einem der vorhergehenden Ansprüche.

## Revendications

1. Voile-aile (10) pour un yacht (2), la voile-aile (10) comprenant au moins deux sections de voile,
a. une section primaire (100) attachée, solidaire de, ou comprenant un mât (4), et comprenant deux peaux formant au moins une partie d'une surface de profil aérodynamique, la section primaire (100) comprenant en outre une chute (102) au niveau de ses bords arrière (107) et à l'endroit où les deux peaux convergent, et
b. une section mobile (200) configurée pour se déplacer entre une première condition où la section mobile (200) est emboîtée ou partiellement emboîtée dans ou au niveau de la chute (102) de la section primaire (100), et une seconde condition où la section mobile (200) s'étend au moins en partie à partir d'au moins une partie de la chute (102) à partir de l'espace entre les deux peaux, **caractérisée en ce que**
c. la voile comprend une seconde section mobile (800), dans laquelle la seconde section mobile (300) s'emboîte dans la section mobile (200) dans une configuration similaire à la façon dont la section mobile (200) s'emboîte dans la section primaire (100).

2. Voile (10) telle que revendiquée dans la revendication 1, dans laquelle la section primaire (100) comprend une cavité (109) entre les deux peaux, qui peut recevoir la section mobile (200).

3. Voile (10) telle que revendiquée dans la revendication 1 ou 2, dans laquelle la section primaire (100) et la section mobile (200) comprennent une zone de voile qui constitue la zone de voile de la voile-aile.

4. Voile (10) telle que revendiquée dans l'une quelconque des revendications précédentes, dans laquelle dans la première condition, la section mobile (200) est entièrement emboîtée dans la section primaire (100) de sorte que la chute (102) de la section primaire forme la chute de la voile (10).

5. Voile (10) telle que revendiquée dans l'une quelconque des revendications précédentes, dans laquelle, dans la seconde condition, le bord arrière de la section mobile (200) forme au moins une partie de la chute de la voile.

6. Voile (10) telle que revendiquée dans l'une quelconque des revendications précédentes, dans laquelle la section mobile (200) se déplace en translation par rapport à la section primaire (100) pour se déplacer entre les première et seconde conditions.

7. Voile (10) telle que revendiquée dans l'une quelconque des revendications précédentes, dans laquelle la section mobile (200) tourne par rapport à la section primaire (100) pour se déplacer entre les première et seconde conditions.

8. Voile (10) telle que revendiquée dans l'une quelconque des revendications précédentes, dans laquelle la section primaire (100) comprend des régions flexibles au niveau de sa chute (102) qui sont configurées pour fléchir afin de permettre à la section mobile (200) de passer entre les côtés de la section primaire (100) à travers la chute de section primaire (102).

9. Voile (10) telle que revendiquée dans l'une quelconque des revendications précédentes, dans laquelle les bords arrière d'une section de voile forment une chute lorsqu'ils ne sont pas écartés latéralement par une section de voile adjacente.

10. Voile (10) telle que revendiquée dans la revendication 9, dans laquelle les bords arrière de la section primaire (100) se chevauchent avec la section adjacente pour former une jointure comprenant une surface sensiblement continue entre les sections adjacentes les unes aux autres lorsqu'ils sont écartés par la section de voile adjacente.

11. Yacht (2) comprenant une voile-aile (10) telle que revendiquée dans l'une quelconque des revendications précédentes.
